# EUROPEAN PATENT SPECIFICATION

(11) **EP 4 332 404 B1**
(45) Date of publication and mention of the grant of the patent: **19.03.2025**
(21) Application number: 22800311.7
(22) Date of filing: 20.10.2022
(51) Int. Cl.: F16D 55/28, F16D 55/32, F16D 65/18

(54) **BRAKE DEVICE**
BREMSVORRICHTUNG
DISPOSITIF DE FREIN

(30) Priority: 20.10.2021 ES 202130980
(43) Date of publication of application: 06.03.2024
(73) Proprietor: BRL Brake Solutions, S.L., 47003 Valladolid (ES)
(72) Inventor: GÓMEZ BENÉITEZ, José María, 47003 Valladolid (ES); GÓMEZ SEBASTIÁN, Fernando, 47003 Valladolid (ES)
(74) Representative: Ungria López, Javier
(86) International application number: PCT/ES2022/070674
(87) International publication number: WO 2023/067230

(56) References cited:
- WO-A1-2021/156529
- FR-A1- 2 277 705
- US-A- 5 307 730

## Description

### Object of the invention

The invention consists of a brake device that has a system that optimizes the braking capacity of a rotating means such as a shaft, especially based on the retraction capacity of the brake discs. In other words, it is specially designed to reduce the "Time to lock" (TTL) or time needed to brake, by reducing the separation distance of the brake discs with respect to the linings to the minimum to allow the shaft to rotate without any residual friction.

The invention has application in different industrial fields, mainly in the automotive industry, and in all those industries where braking devices act even though they are not related to automobiles, such as turbines or motors used for the generation of electrical energy, but it is especially suitable for vehicles powered by an electric motor.

### Technical problem to be resolved and background of the invention

In the state of the art, many braking systems with different types of configurations are known, the automotive sector specifically being where greater research and development has been carried out in this field, generating different types of braking systems based on the needs of the vehicle.

The most well-known braking system in the automotive sector is the brake disc braking system, wherein once the brake pedal is actuated, a hydraulic, pneumatic or electrical system is activated that moves brake pads towards a disc that rotates jointly with the wheels of the vehicle, such that, by means of friction between the brake pads and the disc, the braking of the wheels and consequently of the vehicle takes place.

In this braking system, the brake disc, as already stated, continuously and rotates jointly with the wheels of the vehicle while the pads are in a fixed position with respect to the wheel. By moving the pads axially towards the brake disc, until they make contact with the disc, and by continuing to exert pressure on it, a friction is generated that causes the braking of the disc and therefore the braking of the wheels of the vehicle, consequently causing overheating between the parts in contact.

Due to the fact that the brake disc is constantly rotating, the only cooling that is obtained is due to the flow of air it receives from natural convection. Likewise, given the surface, material and configuration of the brake pads, it is extremely complex to have a cooling system therein which evacuates the heat generated.

In addition to overheating, in the known systems of the state of the art, pads wear unevenly, causing offsets and eccentricities in said pads that affect braking, so the useful life of both the pads and the brake discs is limited.

Document ES2705358 describes a brake device that defines an axial displacement of the brake discs, while a lining disc rotates jointly with the shaft, as it is mounted on same. With the embodiment described in said document, said brake discs can be cooled by means of a fluid that flows through internal cavities, improving the operation of the device by reducing the heating capacity.

Document ES2705358 also describes a braking device that is specially adapted to allow internal cooling, by means of fluid, of the brake discs, which can only move axially, while a lining disc transmits the rotation of the shaft. This document focuses on the methods of axial displacement of the mobile elements of the device, such as brake discs and lining discs.

Document WO2021156529A1 discloses a brake device to be installed directly on a driving axle, wherein said device comprises a first brake disc joined to the axle sharing rotary motion, a first container disc and a second container disc configured to be moved in the axial direction of said axle.

Document FR2277705 discloses a double disc brake for a motor vehicle wherein the wheel to be braked is fixed on a flange hub using several wheel studs, wherein there is provided on each wheel stud an extension or end piece directed towards the inside, in that two discs are mounted on the stud ends, at least one of the discs being able to slide axially on said ends.

US5307730A discloses a piston return spring system with self-adjusting clearance feature for use in fluid operated friction torque transmission devices including relatively rotatable members carrying a plurality of torque plates one of the members providing a fluid chamber in which the piston means is reciprocable.

None of the documents mentioned, nor those found, mention or define a retraction system, which consists of a displacement of the brake discs with respect to the lining discs that is sufficient for said lining disc to be able rotate without friction of any kind, and therefore, allowing to reduce to a minimum the necessary distance to axially move said brake discs in the braking direction until achieving the necessary contact to brake.

In other words, none of the devices described in the documents includes any technical feature that allows there to be provided an approximation system, which positions the brake discs at a minimum distance from the lining disc, without residual friction between them, allowing the braking propagation speed to increase and the braking time to be as short as possible, throughout the entire brake pad wear stroke.

In the same way, the devices described in the aforementioned documents require compression springs located between the lining discs and the brake discs, to separate the contact areas of said discs, thus including an element susceptible to damage and/or corrosion, due to the continuous stress to which it is subjected.

### Description of the invention

The present invention, as defined in the appended independent claim 1, relates to a brake device attachable (or that can be assembled) on a rotating shaft, that is, a torque transmitting shaft, in such a way that it can be assembled on the brake device directly or through intermediate elements such as a bushing.

This brake device is specially adapted to be installed in vehicles that have an electric drive motor or a hybrid drive system, since, in vehicles of this type, the energy efficiency of all the systems incorporated in its architecture becomes much more relevant in order to maximize the electrical energy offered by current batteries, so that they weigh less and offer greater vehicle autonomy.

On the other hand, electric and hybrid vehicles have energy recovery systems that are capable of generating braking torques of up to [0.2 g-0.3 g], cooperating with the mechanical brake system to reach 1 g of emergency deceleration braking, so that the mechanical system is actuated by EHB (Electronic Hydraulic Brake) or 100% electric systems. This brake device substantially improves braking, achieving less wear thanks to its optimization with this approximation system, as in its free rotation, without energy loss due to residual friction, also requiring less energy for its application as it is closer together, and all of this increases vehicle autonomy.

On the other hand, in current vehicles, one of their priorities is the constant improvement in active safety systems. Many of these electronic systems are associated with the braking system, such as ABS, ESP, "torque vectoring", "Antiroll", Traction Control (TC), etc., so that this brake device substantially improves the TTL obtaining more immediate responses on vehicle dynamics, which increases the active safety of the vehicle. Thanks to the design of this mechanical device, it is obtained weighing less and being much more robust when a large axial force is applied to generate high braking torques.

The device comprises:
- a guiding support rigidly attachable on the shaft, wherein said guiding support comprises at least one longitudinal transmitting guide, although it preferably comprises three guide shafts evenly distributed on the guiding support, and wherein said transmitting guide is oriented in the same axial direction of the shaft, located in an eccentric position with respect to the shaft, when the guiding support is assembled on the shaft;
- a first fixed support casing, that is, it does not move or rotate with respect to the shaft and allows the rigid fixing of the brake device to an external frame, such as a vehicle;
- a first pusher element movable in the axial direction with respect to the first casing;
- a lining disc comprising:
   - a support disc coupled to the at least one transmitting guide of the guiding support in a floating manner;
   - a first lining assembled on a first surface of the support disc; and
   - a second lining assembled on a second surface of the support disc;
- a first brake disc movable in the axial direction with respect to the first casing; and
- a second brake disc;
- wherein the lining disc is located between the first brake disc and the second brake disc;
- wherein the guiding support is configured to transmit a rotation of the shaft to the lining disc, which is configured to rotate jointly with the shaft, as it is coupled by the at least one transmitting guide of the guiding support.

The fact that the support disc is coupled to the transmitting guide or guides in a floating manner means that, although said disc rotates with the shaft if it is mounted on or coupled to same, the support disc can move in the axial direction of the shaft even if the shaft does not move, since, for example, it can have a loose coupling.

The second brake disc can be mounted in the same way as the first brake disc, that is, it can move axially with respect to the shaft, but it can also remain motionless for the device to work, without requiring the loose coupling.

The first pusher element and the first brake disc are fixed, forming an axial displacement unit, that is, whenever they move, they do so together as a single element. For this purpose, the brake device may comprise compression springs located between the brake discs, so that, regardless of the displacement of the first pusher element, said first brake disc is always in contact with the first pusher element. In other embodiments, said elements can be fixed in another way, such as by means of mechanical elements such as pins, even forming a single casting.

The first casing comprises a drive system configured to, when activated, move the first pusher element, in the axial direction, towards the brake disc, pushing the first brake disc towards the first brake lining of said brake disc, generating a first friction, in such a way that in said displacement, the first brake disc is configured to exert a pushing pressure on the first lining of the lining disc, in the axial direction, and to move it towards the second brake disc, when it is pushed by the first pusher element.

In this way, the second brake disc can remain immobile, acting as a stop for the axial displacement of the first pusher element, thus allowing the lining disc to contact each brake disc on both sides, compressing the linings, generating a braking torque, which is transmitted from the brake discs to the shaft. In this way, the second brake disc does not need to move axially to brake the lining disc and can be rigidly attached to the first casing, although it is also preferably fixed in a floating manner.

In the same way that the drive system, when activated, can move the brake disc in the pushing direction, towards the second brake disc, it is also configured to, when deactivated, retract the first pusher element, moving said first pusher element, in an opposite direction to the direction of pushing on the first brake disc, in the axial direction.

In this way, the first brake disc is also configured to move in an opposite direction to the direction of pushing on the lining disc, in the axial direction, jointly with the retraction, in said opposite direction, of the first pusher element.

The retraction consists of a minimum displacement of the first pusher element in the opposite direction to the pushing displacement, so that said displacement is also carried out by the first brake disc, by forming an axial displacement unit. With this small displacement, a small axial clearance space is generated between the two brake discs, where the lining disc is located.

The floating coupling of the lining disc on the transmitting guide together with the rotation of said lining disc, as it is coupled to the rotating shaft, are configured to place said lining disc between the two brake discs, within the axial clearance generated, being self-positioned, when the first brake disc moves in the opposite direction. In other words, it does not require springs between the support disc and the brake discs for them to separate, with the attachment of the lining disc to the transmitting guide being sufficient.

In this way, the retraction only moves the first brake disc enough so that the lining disc can rotate without any type of residual friction with the brake discs. Therefore, the block time for a new braking is reduced to a minimum, since the travel of the first brake disc in a new braking would also be minimal.

In the same way, this configuration also allows to always adjust the separation distance of the brake discs to the lining disc when the linings are worn. In other words, regardless of the wear of the linings, with this configuration, the brake discs are always located at a minimum distance from the linings, and this distance is determined according to the elements that make up the drive system, solving the problems present in the devices described in the background.

In other words, thanks to the free rotation of the lining disc (without being subjected to axial force by the brake discs through springs) and its floating position with respect to the guiding support, the lining disc produces a very small lateral eccentricity, sufficient to move apart, and be moved apart, on each side of the brake discs until inertia self-positions it in the center. It is clear that the minuscule space generated by retraction of the pusher is sufficient for the "self-fitting" to occur and to free the lining from any friction and to free the rotating shaft from any residual brake.

In one embodiment, the brake device comprises:
- a second fixed support casing, arranged at an opposite end part of the first support casing;
- a second pusher element movable in the axial direction with respect to the second support casing;
wherein the second pusher element and the second brake disc are fixed, forming an axial displacement unit and wherein the second casing comprises a drive system configured to, when activated, move the second pusher element, in the axial direction, towards the lining disc, pushing the second brake disc towards the second lining of said lining disc.

In other words, the operation of the device having a second casing would be the same as with the first casing, only that in this case, the second brake disc can move in the axial direction, towards the lining disc. In this way, faster braking could be produced by moving both brake discs towards the linings at the same time.

In this embodiment, the second brake disc is configured to exert a pushing pressure on the second lining in the axial direction, and to move said brake disc towards the first brake disc, when it is pushed by the second pusher element.

In the same way as with the first pusher element, the drive system of the second casing is configured to, when deactivated, retract the second pusher element, said second pusher element moving in a direction opposite to the direction of pushing on the second disc brake, in the axial direction.

For this reason, the second brake disc is configured to move in a direction opposite to the direction of pushing on the lining disc, in the axial direction, jointly with the retraction of the second pusher element, and the lining disc is configured to be self-positioned between the two brake discs, that is, to be separated from both, without generating residual friction, when the first and second pusher elements are retracted.

These embodiments, both with a first or with a first and a second casing, allow there to be two or more brake discs as well as one or more lining discs, intercalated between said brake discs, and not being limited to having two brake discs and only one lining disc.

In one embodiment, the support disc of the lining disc comprises:
- an outer perimeter area on the first and second surfaces of the support disc in which the linings are fixed; and
- at least one sliding connection housing, which comprises the axial direction;
wherein said sliding connection housing is preferably located in a perimeter part of a central through hole of the support disc, and is coupled to the at least one longitudinal transmitting guide in a loosely adjusted attachment.

In one embodiment, the brake device comprises an elastic damping gasket located between each fitted coupling of each transmitting guide and the sliding connection housing of the lining disc. Said gasket allows the coupling between said parts to be more damped, avoiding vibrations and resonances that can damage the components of the device, canceling, in the same way, vibrations that can produce frequencies in the human hearing spectrum. Preferably, said gasket is made of fluoropolymer rubber, which has a high chemical resistance, is highly resistant to abrasion and corrosion, and is able to withstand a continuous temperature of 200°-280°, with peaks of 340°, making it suitable for the described use.

In one embodiment, the lining disc comprises a plurality of fins, which allow the heat accumulated in the disc to be dissipated, arranged on a perimeter of a central through hole of the support disc, wherein:
- said plurality of fins are rigidly attached to the support disc by means of a rigid connection means; or
- wherein said plurality of fins and the support disc comprise a single casting.

In other words, they can be made in one piece or in several attached together by mechanical means such as welding or screws.

When the lining disc rotates, due to its coupling to the rotating shaft, these fins rotate with the same angular velocity. In their rotation, the fins generate a drive of fluid, creating a current from the inside to the outside. Depending on the angle of inclination and surface of these fins, higher speed and fluid flow rate may be provided at the same rpm.

In one embodiment, the lining disc comprises a plurality of first linings and second linings, fixed, respectively, in an outer area of the first and second surfaces of the support disc, said linings being separated by radial channeled gaps; wherein the linings comprise a blade shape.

These channeled gaps favor the expulsion of particles out of the support disc, wherein a filter can be placed that allows them to be retained to prevent them from affecting the operation of the device, as well as to reduce environmental pollution.

In one embodiment, the brake device comprises a particle filtering structure arranged concentrically covering the lining disc, configured to retain particles detached from the linings. In one embodiment, this structure is arranged between the first and second brake discs.

In another embodiment, the filtering structure is a cylindrical-shaped framework, arranged covering the first and second brake discs, that is, the area where friction is generated and particles are released from the linings to the outside. This framework can be fixed to the casing, as well as to any element that is not subject to displacement with respect to the shaft.

In one embodiment, at least one brake disc comprises an annulus shape, with a central disc through hole, concentric to the shaft, comprising the axial direction, and a solid outer friction section against linings. In other words, the area in which the friction of said brake disc is generated is solid so that it has a greater capacity to resist the stresses to which it is subjected.

In one embodiment, at least one brake disc comprises an annulus shape, with a central disc through hole, concentric to the shaft, that is, comprising the axial direction, and an outer friction section against linings comprising at least one internal channel configured for the passage of a fluid. Preferably, said brake disc comprises a plurality of radially open internal channels through which a fluid, such as air, can pass in order to cool the brake disc, which is susceptible to heating up.

In one embodiment, at least one brake disc comprises a plurality of heat dissipation brake fins, wherein preferably, said brake fins are located on an outer perimeter of said brake disc, arranged in a radial direction.

In the same way as with the brake discs, these heat dissipation fins can be part of the same casting body or of two or more rigidly attached independent bodies. In this way, if they are two bodies manufactured independently, the advantage is that the fins can be made of a material that has a better thermal conductivity so that it improves temperature dispersion (for example aluminum).

In one embodiment, the brake device comprises a bearing, preferably a roller bearing, which can be assembled on the shaft. This bearing allows the brake discs or the casing, which do not rotate on the shaft, to be supported, transmitting the transverse stresses of said components to the shaft.

In one embodiment, the brake device comprises at least one compression spring located between the brake discs, configured to exert a separation pressure between said brake discs. Said spring allows said brake discs to always be kept separated by a distance determined by the pusher element of the drive system.

In one embodiment, the brake device comprises at least one guide element, fixed to the first housing, oriented in the axial direction of the shaft; wherein the first brake disc comprises a through hole loosely fitted to said guide element; wherein the second brake disc comprises a through hole fitted to the guide element, which can also be loosely fitted, especially if the brake device comprises a second casing and a second pusher element.

In one embodiment, the brake device comprises an elastic damping gasket located between each fitting of each guide element and each through hole of the brake discs. This elastic gasket can be the same as the one located between the sliding connection housing of the lining disc and the transmitting guide.

In one embodiment, the brake device comprises a plurality of guide elements each comprising a guide screw inserted into a through hole, of the same plurality of through holes, of each of the brake discs, wherein said guide screws are configured to guide the displacement of the first brake disc in the axial direction of the shaft. Said guide screws are preferably inserted into the through holes located in lugs of each of the brake discs.

In one embodiment, the brake device comprises a plurality of compression springs, each one mounted concentrically on each guide screw, said compression springs being located between the first and second brake discs, said compression springs being configured to exert a separation pressure between said brake discs.

The guide screws allow the distance between the first casing and the second brake disc, or between the two casings, to be limited, depending on the embodiment, as they can be threaded onto nuts that fix the components of the brake device.

In one embodiment, the pusher element of the axial drive system comprises:
- a piston configured to generate a pushing load on a lateral surface of the first brake disc, said surface being opposite to the surface that generates friction with the first lining;
wherein said piston is configured to be housed and moved longitudinally, that is, in the axial direction, in a cavity of the first casing in one pushing direction and in a retraction direction, opposite to the pushing direction.

In one embodiment, the axial drive system of the first pusher element comprises:
- at least one fluid access, such as for a liquid or a gas, located in the casing, said access being configured to introduce and extract fluid in the cavity of said casing; wherein the introduction and extraction of said fluid is configured to move the piston in the axial direction;
- a high pressure gasket located in the cavity of the first casing, configured to exert transverse pressure on a lateral surface of the piston;
- also being able to comprise an O-ring, parallel to the high pressure gasket, also located in the cavity of the casing, to avoid pressure losses;
wherein said high pressure gasket is configured to retract the piston into the cavity of the first casing when the axial drive system is deactivated.

The high pressure gasket is configured so that it deforms upon transverse contact with the surface of the piston when the piston moves in the pushing direction, undergoing an elastic deformation that allows storage of deformation energy, which performs the retraction displacement when the actuation system is deactivated. In other words, retraction depends directly on the properties and shape of the high pressure gasket, as well as on its deformation.

Preferably, the high pressure gasket is made of ethylene propylene diene rubber or EPDM, which consists of an elastomeric thermopolymer with high abrasion and wear resistance.

Preferably, the high pressure gasket is formed by two concentric gaskets facing each other in the cavity of the casing, each of which gaskets even more preferably has a U-shaped section.

With the gaskets (high pressure gasket and O-ring) the tightness of the chamber that is generated between the casing and the piston is guaranteed.

In this embodiment, the brake device may comprise a thermal insulation part located between the piston and the first brake disc, or installed in the part of the brake disc wherein it is in contact with the piston. In this way, in the event of an increase in temperature in the first brake disc, said insulating part allows thermal insulation of the piston, which is in contact with the fluid in the casing chamber, thus avoiding possible problems of said fluid boiling, which could cause a failure at the time of braking, known as the "Fading Effect".

In one embodiment, the piston comprises a cylindrical ring shape and the compression springs comprise a conical shape; or the piston comprises a conical ring shape and the compression springs comprise a cylindrical shape.

In order to achieve an adequate force balancing system so that throughout the entire stroke the brake system is at the maximum approximation between the friction elements, two equivalent solutions are estimated. The first solution is the combination of a cylindrical ring-shaped piston together with conical-shaped compression springs. These elements have a constant resistance force throughout the entire axial displacement stroke, so a balanced system is achieved. The second solution is the combination of a conical piston and some springs that comprise a cylindrical shape, these two elements having a linearly increasing resistance force along the length their stroke, so the system is balanced by equalizing the slope of the resistance force of each element. Both solutions guarantee permanent contact throughout the entire stroke of the pusher element and the first brake disc.

In one embodiment, the axial drive system comprises:
- an electric motor fixed to the casing, configured to rotate a toothed pinion comprised in the pusher element, connected to a shaft of said motor;
wherein the piston comprises a ring shape comprising a thread on an outer cylindrical surface and a toothing on an inner cylindrical surface, meshed with the pinion; wherein the casing comprises an internal thread in the cavity, said internal thread being threaded with the thread of the piston; wherein the electric motor is configured to rotate the pinion, transmitting the rotation to the piston which, upon rotation, is configured to be screwed into or unscrewed from the casing, moving axially, moving the brake disc.

Depending on the torque applied by the electric motor, there will be a higher or lower axial force, increasing or decreasing the resulting braking torque.

This configuration allows precise adjustment of the retraction based on the distance traveled by the first pusher element, turning the motor in the direction opposite to the pushing displacement, only as much as is needed to leave enough clearance between the two brake discs so that the linings on the lining disc do not rub against any of them.

Similarly, this configuration also allows for a built-in auxiliary (hand) brake. This is because by rotating the piston with a desired torque, an axial force can be generated which, thanks to the resistance force of the thread of the piston with the cavity of the casing, it allows the mechanical load torque to be maintained constant, even though it does not have torque from the electric motor.

In one embodiment dependent on this previous embodiment, the brake device may comprise:
- an outer cover rigidly fixed to an outside of the casing, configured to seal the outside part of the casing;
- an inner cap rigidly fixed to an inside of the casing, configured to seal the inside part of the piston; and
- an elastic dust cover that prevents the entry of particles into the geared system of the piston with respect to the pinion.

In one embodiment, the axial drive system of the pusher element comprises:
- two electric motors fixed to the casing;

wherein the pusher element comprises two pressing members, each of which is connected by a threaded attachment to a shaft of the electric motor, said pressing members being configured to push the brake disc, in the pushing direction, in the axial direction, directly or through a piston located between both;
wherein upon actuation of the electric motors, the threaded attachment of the pressing members transforms the rotation of the motor into an axial displacement of the pressing members, moving them in said axial direction.

In the same way as with the embodiment with one motor, with this embodiment with two motors it is possible to adjust the retraction to the minimum and sufficient distance so that the lining disc can rotate without residual friction.

In one embodiment, the brake device comprises a turbofan skeleton comprising a hollow cylindrical shape and a plurality of blades, separated by cavities, said blades arranged on a lateral surface of the turbofan, wherein said turbofan is arranged concentrically surrounding the brake discs and the lining disc, it is connected to the rotating shaft, and it is configured to rotate about itself, with respect to the first housing, generating forced ventilation in the brake device.

This turbofan skeleton could also be suitable for use in other brake devices that do not have to comprise all the essential features of the device described above, since it can provide ventilation that cools the components that are likely to heat up due to friction.

### Description of the figures

To complete the description, and for the purpose of helping to make the features of the invention more readily understandable, this specification is accompanied by a set of drawings constituting an integral part of the same, which by way of illustration and not limitation represent the following:
- Figure 1A shows a perspective view of a brake disc, which can be the first or the second brake disc since both can be the same, comprising an annulus shape, with a central disc through hole comprising the axial direction and a solid outer friction section.
- Figure 1B shows a perspective view of a brake disc comprising an annulus shape, with a central disc through hole comprising the axial direction and an outer friction section comprising a plurality of radially open internal channels configured for the passage of a fluid inside the brake disc in order to cool same.
- Figure 1C shows a perspective view of a brake disc like the one shown in Figure 1A, comprising a plurality of heat dissipation brake fins located on an outer perimeter of said brake disc, arranged in a radial direction.
- Figure 1D shows a perspective view of a brake disc like the one shown in Figure 1B, with a plurality of fins like those of the disc shown in Figure 1C.
- Figure 2 shows a perspective view of a brake disc, which has four linings on each side of the support disc, together with a brake disc that is connected to four guide screws that are each assembled on a compression spring.
- Figures 3A and 3B show two opposite perspective views of a brake device comprising a filtering structure arranged concentrically covering the lining disc, wherein the axial drive system comprises a fluid access in the casing.
- Figure 4 shows an exploded perspective of a brake device shown in Figures 3A-3B, wherein the components of said device except for the piston and the high pressure gasket, which are located in the cavity of the casing, can be seen.
- Figures 5A and 5B show two opposite perspective views of a brake device comprising a filtering structure consisting of a cylindrical-shaped framework, arranged covering the first and second brake discs, wherein the axial drive system comprises two electric motors fixed to the first casing, each connected to a pressing member.
- Figure 6 shows an exploded perspective view of a brake device shown in Figures 5A-5B, wherein the components of said device can be seen.
- Figures 7A and 7B show two opposite perspective views of a brake device comprising a filtering structure covering the lining disc and a turbofan comprising a hollow cylindrical shape and covering the brake and lining discs, wherein the axial drive system comprises an electric motor fixed to the first casing.
- Figure 8 shows an exploded perspective view of a brake device shown in Figures 7A-7B, wherein the components of said device, such as the piston and casing, can be seen threaded together.
- Figure 9 shows an interrupted view of a casing with a fluid drive system, and the access for a fluid as well as the high pressure gasket surrounding the piston can be seen.
- Figures 10A-10C show a schematic view of the displacement of a piston in the cavity of a casing by means of a drive system comprising an access for a fluid.

A list of the numerical references used in the depicted figures is provided below:
(1) Guiding support
(2) Transmitting guide
(3) First casing
(4) O-ring
(13, 17, 18) First pusher element
(5) Lining disc
   (51) Support disc
   (52) First lining
   (53) Second lining
   (54) Sliding connection housing
   (55) Lining fins
   (56) Channeled gaps
(6) First brake disc
   (61) First brake disc outer friction section
   (62) First brake disc internal channel
   (63) First brake disc brake fins
   (64) First brake disc through hole
(7) Second brake disc
   (71) Second brake disc outer friction section
   (72) Second brake disc internal channel
   (73) Second brake disc brake fins
   (74) Second brake disc through hole
(8) Elastic damping gasket
(9) Filtering structure
(10) Bearing
(11) Compression spring
(12) Guide element
(13) Piston
(14) Fluid Access
(15) High pressure gasket
(16) Electric motor
(17) Pinion
(18) Pressing members
(19) Turbofan skeleton
   (191) Turbofan blades
(20) Bushing

### Preferred description of the invention

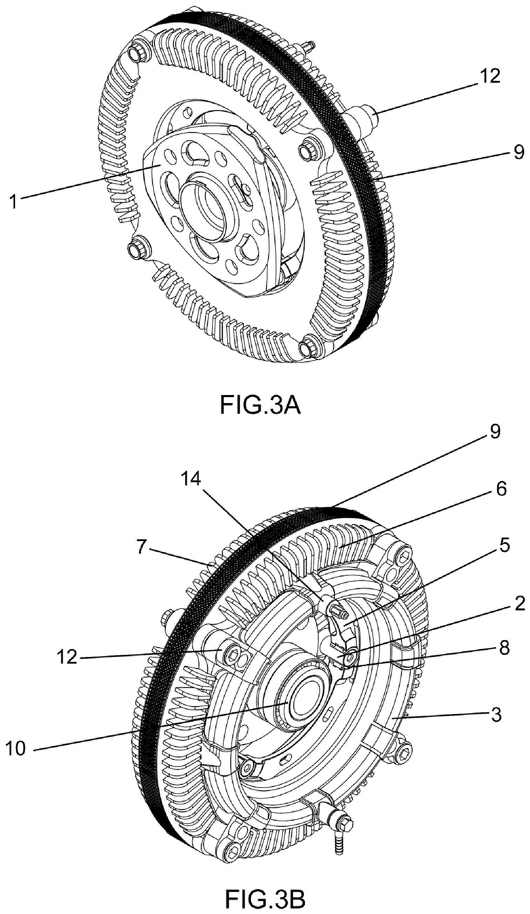

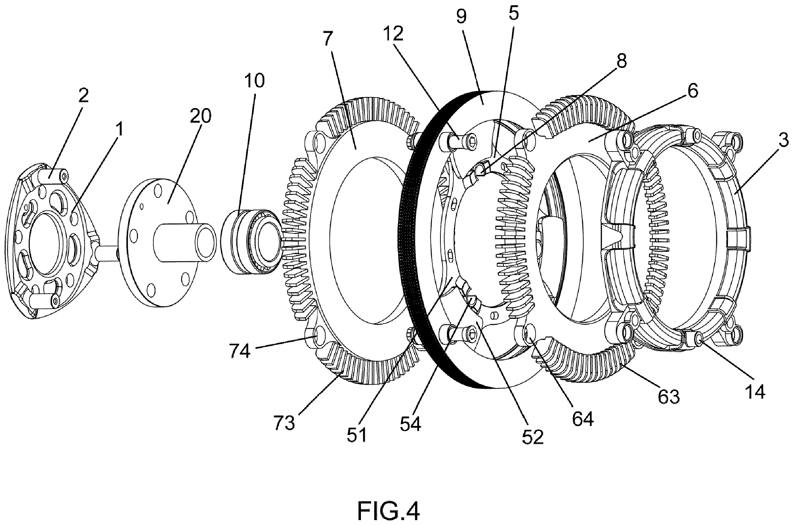

As can be seen in the figures, especially in Figures 3, 5 and 7, as well as in exploded views in Figures 4, 6 and 8, the invention consists of a brake device in which the element that rotates jointly with the shaft to brake (as it is configured to be coupled to same) is the lining disc (5), while the first brake disc (6) and the second brake disc (7), which are located on both sides of the lining disc (5), do not comprise rotation jointly with the shaft, as is common in most of the existing braking systems on the market, but instead have a floating connection with respect to the shaft, which allows axial displacement thereof.

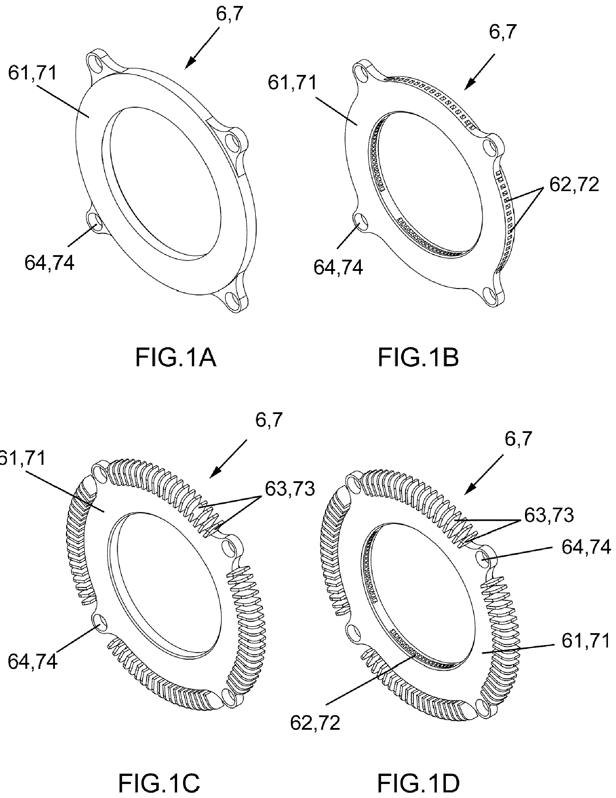

Figures 1A-1D show a perspective view of different embodiments that the first brake disc (6) and the second brake disc (7) may have, in such a way that all the figures show an annulus-shaped brake disc (6, 7), comprising an outer friction zone or section (61, 71) that can be solid, as shown in Figures 1A and 1C, or comprise a plurality of internal channels (62, 72) that are open and arranged radially, as shown in Figure 1B and 1D. In the same way, Figures 1C and 1D show that the brake discs (6, 7) can comprise a plurality of fins, called brake fins (63, 73) as they are located on the brake disc (6, 7), and these fins can be part of the same casting as the rest of the disc or can be fixed by mechanical means such as screws, pins, or welding. These brake discs (6, 7) also have four fixing lugs, evenly distributed on the outer perimeter, each comprising a first brake disc through hole (64) and second brake disc through hole (74), said hole having an axial direction.

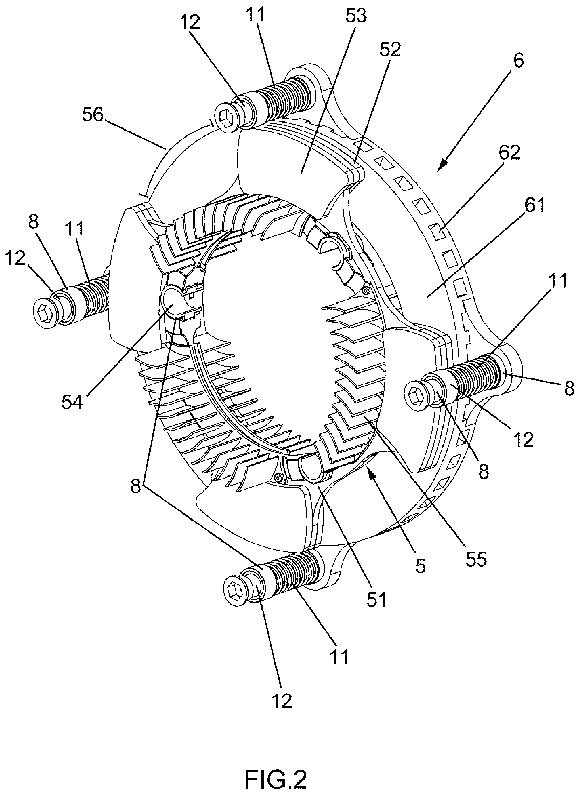

In Figure 2, it can be seen what the connection of a first brake disc (6) with a lining disc (5) would be. Said lining disc (5) is located between the two brake discs (6, 7), and like these, it comprises a circular through hole in the center, which allows placement of the shaft or bushing (20) to which it can be connected.

The lining disc (5) shown in Figure 2 comprises a support disc (51) comprising an outer area, wherein, on the first and second surfaces of said support disc (51), four first linings (52) and four second linings (53) are fixed rigidly and respectively, being evenly distributed, so that the first four linings (52) are in contact with the first brake disc (6).

In a central part of the support disc (51), the lining disc (5) comprises three evenly distributed pass-through sliding connection housings (54), wherein said three connection housings (54) comprise an axial direction and being configured to be assembled tightly or loosely, respectively, with three transmitting guides (2) of the guiding support (1). To ensure that said fitting is suitable and to avoid unwanted vibrations or frequencies in the operation of the brake device, an elastic damping gasket (8) is located between each fitting of said sliding connection housings (54) with the transmitting guides (2). In this way, the rotation of a shaft connected to the guiding support (1) is shared by the lining disc (5), but said lining disc (5) can move in the axial direction of the shaft, regardless of the displacement of said shaft.

Since the support disc (51) can heat up due to the friction of the linings (52, 53) with the brake discs (6, 7), the lining disc (5) comprises a plurality of heat dissipation lining fins (55) located on the perimeter of the center circular through hole. These lining fins (55) act by not only dissipating the accumulated heat, since, when the lining disc (5) rotates, when coupled to the shaft, they generate a forced current that can ventilate the entire brake device.

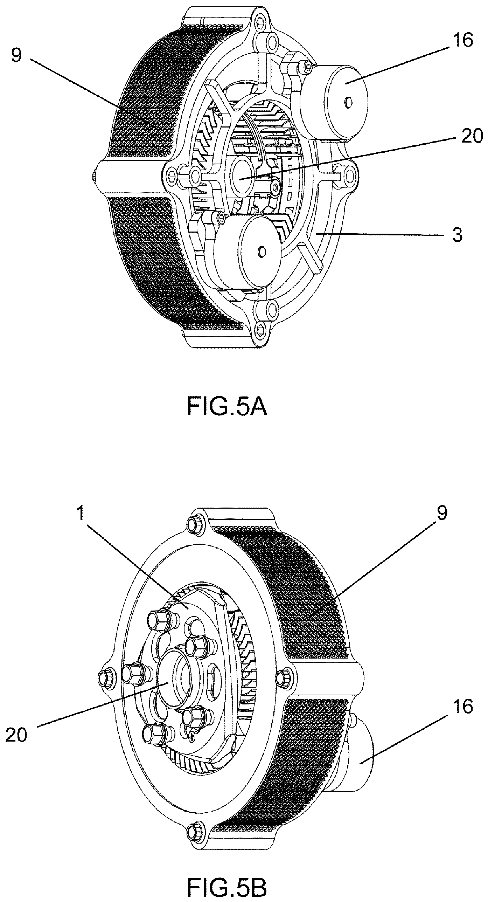

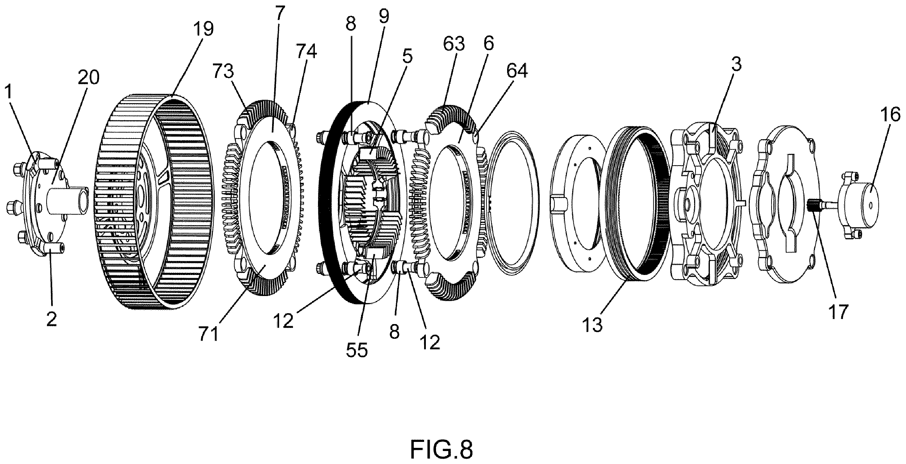

As can be seen in Figure 2, between each lining of the first linings (52) or second linings (53) there is a channeled gap (56), which can be larger or smaller, depending on the size and number of linings included in the disc. Said channeled gaps (56) are specially designed to direct the particles generated in the wear of the linings (52, 53), due to friction with the brake discs (6, 7), radially outwards, wherein a filtering structure (9) can be located concentric to the lining disc (5), between the first brake disc (6) and the second brake disc (7), as shown in Figures 4 and 8, or covering both brake discs (6, 7), as shown in Figures 5A and 5B.

In addition to the mentioned elements, the operation of the brake device also requires a first casing (3) that can be rigidly connected to a frame, since it does not move with respect to the shaft, with said first casing (3) located next to the first disc (6), on the opposite side on which the lining disc (5) is located, which, like the brake discs (6, 7) can be supported on a bearing (10) that can be connected to the shaft in order to be able to transmit the transverse loads; and a first pusher element (13, 17, 18) movable in the axial direction with respect to the first casing (3) by means of a drive system located between the first casing (3) and the first brake disc (6).

This drive system of the device is configured to axially move, in a pushing direction towards the first linings (52), the first pusher element (13, 17, 18) which is always in contact with the first brake disc (6), moving it in said direction, contacting the first lining (52) of the lining disc (5). This pushing (5) also generates an axial displacement in said lining disc (5), as it is connected to the transmitting guides (2) in a floating manner, in the same direction, until the second linings (53) contact the second brake disc (7), so that the generated tightening of the linings (52, 53) with the brake discs (6, 7) causes friction that leads to the braking of the shaft.

The brake discs (6, 7) are coupled through the through holes (64, 74) on guide elements (12), also arranged in the axial direction, to be able to move axially with respect to the shaft and the first casing ( 3) in a floating manner.

These guide elements (12) each comprise a guide screw threaded to a nut, and in addition to fixing the axial travel of the brake discs (6, 7), they also allow the length of their displacement to be delimited from the head of said screw to the nut to which it is threaded.

As can be seen in Figures 4 and 8, the couplings of each guide element (12) with the through holes (64, 74) comprise an elastic damping gasket (8) that facilitates sliding, dampen the possible vibrations generated, and also prevent possible thermal expansion from being able to affect the operation of the device.

In order for the brake discs (6, 7) to be sufficiently separated so as not to contact the linings (52, 53) except when they are pushed by the first pusher element (13, 17, 18), the brake device comprises compression springs located on the guide elements (12), which generate a controlled compression stress aimed at separating said discs (6, 7) as much as possibly allowed by the screws, nuts and pusher element.

One of the main novelties of the claimed brake device is that the drive system is configured so that the displacement in the direction opposite to the pushing displacement by the first pusher element (13, 17, 18), when it is desired to stop exerting the brake, is the minimum necessary and sufficient to allow the rotation of the lining disc (5), jointly with the shaft, without residual friction with the brake discs (6, 7). In this way, the distance that the brake discs (6, 7) must travel again towards the brake linings (52, 53) to carry out a new braking is reduced to a minimum. In other words, the braking time known as "Time to lock" (TTL) is reduced since the displacement in the direction opposite to the pushing displacement consists of a retraction of the first pusher element (13, 17, 18).

This configuration allows the braking time to be shorter, so that even when the linings (52, 53) are worn, the distance to be traveled by the brake discs (6, 7) is always the minimum, and this is due to the fact that the brake discs (6, 7) as well as lining disc (5) are mounted in a floating manner.

The retraction of the first pusher element (13, 17, 18) generated by the drive system can be due to three embodiments shown in exploded views in Figures 4, 6 and 8.

In the embodiment of Figure 4, also shown in Figures 3A-3B, the first casing (3) comprises a cylindrical ring-shaped cavity in which a piston (13) is located. When a fluid, liquid or gas, is introduced into said cavity, axial displacement of said piston (13) (not visible in Figure 4) takes place, which moves the first brake disc (6) towards the lining disc (5), generating a first friction. Said displacement continues until moving the lining disc (5) against the second brake disc (7), wherein a tightening between the two linings (52, 53) with the two brake discs (6, 7) is generated.

When it is desired to stop braking, the fluid is no longer introduced into the cavity of the first casing (3), and it is a high pressure gasket (15) that moves the retraction into said cavity.

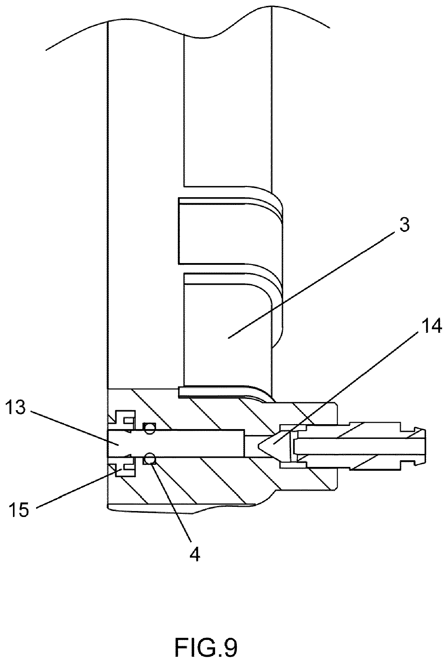

This high pressure gasket (15) is shown in Figure 9 and preferably consists of two gaskets or rubbers made of ethylene propylene diene or EPDM, with a U-shaped section, fixed to each side of the internal cavity, arranged concentrically to the piston.

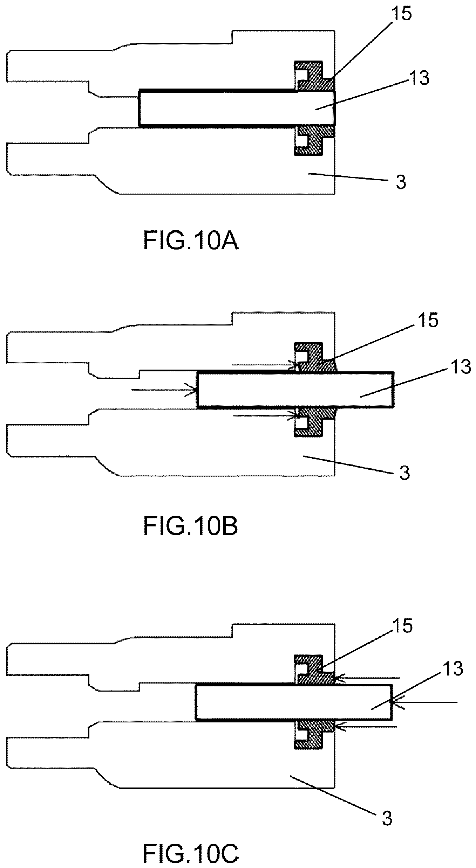

As can be seen in schematic Figures 10A-10C, when said gasket (15) deforms elastically in the axial displacement, in the pushing direction, a deformation energy is stored that causes the piston (13) to be retracted when it no longer exerts the pushing force. In this way, the displacement of the retraction will always be the same; it will always be the minimum necessary so that the lining disc (5) can rotate without friction with the brake discs (6, 7), which is especially suitable for preventing energy from being drawn off when braking is not desired. In the same way, wear of the linings (52, 53) is prevented from causing a longer braking time due to the longer stroke to be traveled by the pusher.

In the embodiments shown in Figures 5-8, the displacement of the first pusher element (13, 17, 18) in the axial direction is no longer hydraulic or pneumatic, but electrical.

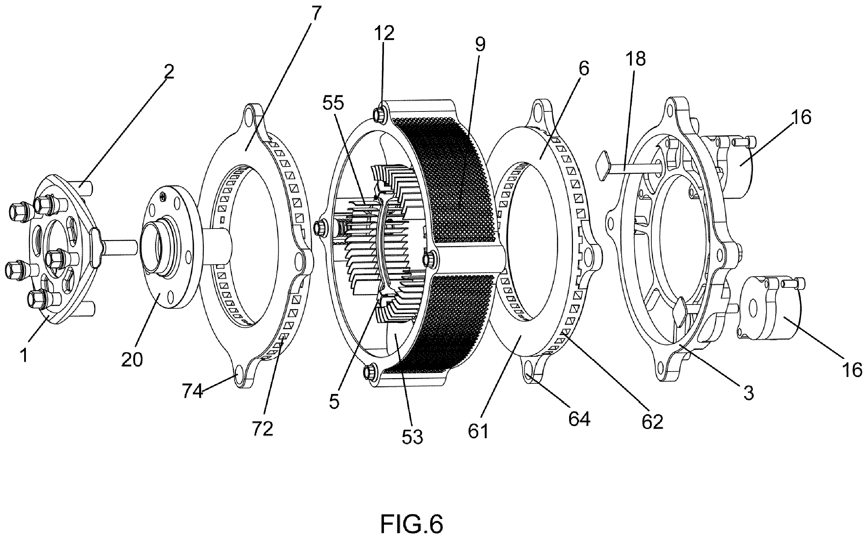

In this way, in the embodiment shown in Figures 5A-5B and 6, the drive system comprises two electric motors (16) fixed to the first casing (3), each of which is connected by a thread configured to convert rotation into longitudinal displacement with an axially movable pusher (18), which can directly press the first brake disc (6) or a piston (13) located between them.

In this way, these two electric motors (16) allow the first brake disc (6) to be moved in an aligned manner, as they are diametrically opposite one another, towards the lining disc (5) in the same way as with the fluid. To perform the retraction, it is enough for the electric motors (16) to move a minimum rotation in the direction opposite to the pushing direction to generate sufficient clearance between the brake discs (6, 7) and the lining disc (5) to that the latter can rotate without residual friction.

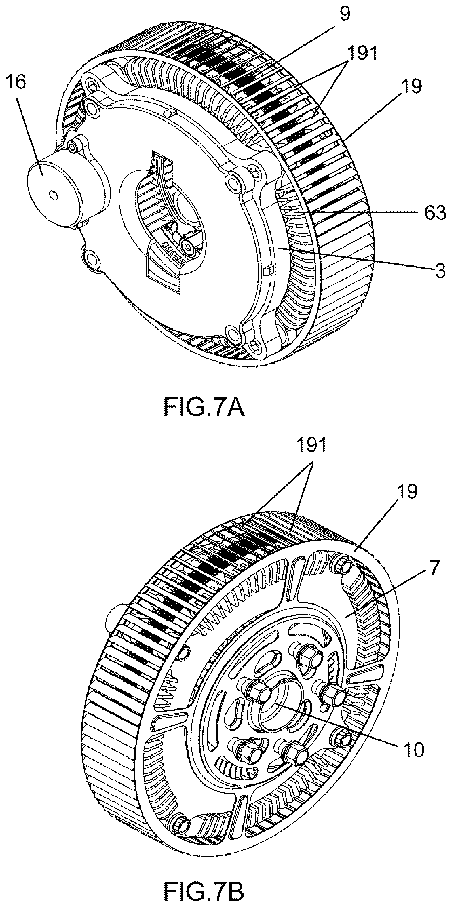

In the embodiment shown in Figures 7A-7B and 8, the brake device comprises only one electric motor (16) that overcomes the possible misalignments or eccentricities of the first brake disc (6), in its axial displacement, with a geared system.

In this way, said embodiment comprises a pinion (17) connected to a shaft of the electric motor (16), meshed with an inner toothing of the piston (13), which comprises a thread on an outer surface, threaded with a thread of the internal cavity of the first casing (3). The operation of this embodiment consists of the fact that the electric motor (16) rotates the pinion (17), which in turn transmits the rotational movement to the piston (13), transforming said rotation into an axial displacement.

Therefore, the electric motor (16) can axially move the piston (13) in any of the axial directions, either to perform the pushing that generates the braking or to carry out the retraction.

This embodiment also shows a turbofan skeleton (19) that can be connected to the shaft through the bushing (20), which can rotate about itself, generating an current outside the brake discs (6, 7) and the lining disc (5) due to a plurality of blades (191) located on a cylindrical surface of said turbofan (19), which allows device components that are likely to overheat to be cooled, taking advantage of the rotation of the shaft.

## Claims

1. A brake device attachable on a rotating shaft, wherein the brake device comprises:
- a guiding support (1), rigidly attachable on the shaft, comprising at least one longitudinal transmitting guide (2) oriented in the same axial direction of the shaft, located in an eccentric position with respect to the shaft, when the guiding support is assembled on the shaft;
- a first fixed support casing (3);
- a first pusher element (13, 17, 18) movable in the axial direction with respect to the first casing (3);
- a lining disc (5) comprising:
- a support disc (51) coupled to the at least one transmitting guide (2) of the guiding support (1) in a floating manner;
- a first lining (52) fixed to a first surface of the support disc (51); and
- a second lining (53) fixed to a second surface of the support disc (51);
- a first brake disc (6) movable in the axial direction with respect to the first casing (3); and
- a second brake disc (7);
wherein the lining disc (5) is located between the first brake disc (6) and the second brake disc (7);
wherein the guiding support (1) is configured to transmit a rotation of the shaft to the lining disc (5), which is configured to rotate jointly with the shaft; **characterized in that** the first pusher element (13, 17, 18) and the first brake disc (6) are connected, forming an axial displacement unit;
- wherein the first casing (3) comprises a drive system configured to, when activated, move the first pusher element (13, 17, 18), in the axial direction, towards the lining disc (5), pushing the first disc brake (6) towards the first lining (51) of said lining disc (5);
- wherein the first brake disc (6) is configured to exert a pushing pressure on the first lining (52) in the axial direction, generating friction, and to move said lining disc (5) towards the second brake disc (7), when it is pushed by the first pusher element (13, 17, 18);
- wherein the drive system is configured to, when deactivated, retract the first pusher element (13, 17, 18), moving in an opposite direction to the direction of pushing on the first brake disc (6), in the axial direction;
- wherein the first brake disc (6) is configured to move in the opposite direction to the direction of pushing on the lining disc (5), in the axial direction, jointly with the retraction of the first pusher element (13, 17, 18); and
- wherein the floating coupling of the lining disc (5) on the transmitting guide (2) together with the rotation of said lining disc (5) are configured to separate it from the two brake discs (6, 7) when the first brake disc (6) moves in the opposite direction.

2. The brake device according to the preceding claim, comprising:
- a second fixed support casing, arranged at an opposite end part of the first casing (3);
- a second pusher element movable in the axial direction with respect to the second casing;
wherein the second pusher element and the second brake disc (7) are fixed, forming an axial displacement unit;
wherein the second casing comprises a drive system configured to, when activated, move the second pusher element, in the axial direction, towards the lining disc (5), pushing the second brake disc (7) towards the second lining (53) of said lining disc (5);
wherein the second brake disc (7) is configured to exert a pushing pressure on the second lining (53) in the axial direction, and to move said lining disc (5) towards the first brake disc (6), when it is pushed by the second pusher element; wherein the drive system of the second casing is configured to, when deactivated, retract the second pusher element, moving in an opposite direction to the direction of pushing on the second brake disc (7);
wherein the second brake disc (7) is configured to move in the opposite direction to the direction of pushing on the lining disc (5), in the axial direction, jointly with the retraction, in said opposite direction, of the second pusher element; wherein the floating coupling of the lining disc (5) on the transmitting guide (2) together with the rotation of said lining disc (5) on the shaft are configured to separate said lining disc (5) from the two brake discs (6, 7), without generating residual friction, when the first and second pusher element (13, 17, 18) are retracted, moving the brake discs (6, 7) in the opposite direction to the pushing direction.

3. The brake device according to any of the preceding claims, wherein the support disc (51) of the lining disc (5) comprises:
- an outer perimeter area on the first and second surfaces of the support disc (51) in which the linings (52, 53) are fixed; and
- at least one pass-through sliding connection housing (54), which comprises the axial direction;
wherein said sliding connection housing (54) is coupled to the at least one longitudinal transmitting guide (2) in a loosely fitted attachment.

4. The brake device according to the preceding claim, comprising an elastic damping gasket (8) located between each fitted coupling of each transmitting guide (2) and the sliding connection housing (54) of the lining disc (5).

5. The brake device according to any of the preceding claims, wherein the lining disc (5) comprises a plurality of heat dissipation lining fins (55) arranged on a perimeter of a central through hole of the support disc (51), wherein:
- said plurality of lining fins (55) are rigidly attached to the support disc (51) by means of a rigid connection means; or
- wherein said plurality of lining fins (55) and the support disc (51) comprise a single casting.

6. The brake device according to any of the preceding claims, wherein the linings disc (5) comprises a plurality of first linings (52) and second linings (53), fixed, respectively, in an outer area of the first and second surfaces of the support disc (51), said linings being separated by radial channeled gaps (56); wherein the linings (52, 53) comprise a blade shape.

7. The brake device according to any of the preceding claims, comprising a particle filtering structure (9) arranged concentrically covering the lining disc (5), configured to retain particles detached from the linings (52, 53).

8. The brake device according to the preceding claim, wherein the filtering structure (9) is a cylindrical-shaped framework, arranged covering the first and second brake discs (6, 7).

9. The brake device according to any of the preceding claims, wherein at least one brake disc (6, 7) comprises an annulus shape, with a central disc through hole, concentric to the shaft, comprising the axial direction and a solid outer friction section (61, 71) against linings (52, 53).

10. The brake device according to any of the preceding claims, wherein at least one brake disc (6, 7) comprises an annulus shape, with a central disc through hole, concentric to the shaft, comprising the axial direction and an outer friction section (61, 71) against the linings (52, 53), comprising at least one internal channel (62, 72) configured for the passage of a fluid.

11. The brake device according to any of the preceding claims, wherein at least one brake disc (6, 7) comprises a plurality of heat dissipation brake fins (63, 73), wherein preferably, said brake fins (63, 73) are located on an outer perimeter of said brake disc (6, 7), arranged in a radial direction.

12. The brake device according to any of the preceding claims, comprising a bearing (10), preferably a roller bearing, attachable on the shaft.

13. The brake device according to any of the preceding claims, comprising at least one compression spring (11) located between the brake discs (6, 7), configured to exert a separation pressure between said brake discs (6, 7).

14. The brake device according to any of the preceding claims, comprising at least one guide element (12), fixed to the first casing (3), oriented in the axial direction of the shaft; wherein the first brake disc (6) comprises a first disc through hole (64) loosely fitted to said guide element (12); wherein the second brake disc (7) comprises a second disc through hole (74) fitted to the guide element.

15. The brake device according to the preceding claim, comprising an elastic damping gasket (8) located between each guide element (12) with each brake disc through hole (64, 74).

16. The brake device according to claim 14 or 15, comprising a plurality of guide elements (12) each comprising a guide screw inserted into a brake disc through hole (64, 74), of the same plurality of through holes (64, 74), of each of the brake discs (6, 7), wherein said guide screws are configured to guide the displacement of the first brake disc (6) in the axial direction of the shaft and are fixed to the casing (3) of the brake device.

17. The brake device according to the preceding claim, comprising a plurality of compression springs (11), each one mounted concentrically on each guide screw, said compression springs (11) being located between the first brake disc (6) and the second brake disc (7), said compression springs (11) being configured to exert a separation pressure between said brake discs (6, 7).

18. The brake device according to any of the preceding claims, wherein the pusher element (13, 17, 18) of the axial drive system comprises:
- a piston (13) configured to generate a pushing load on a lateral surface of the first brake disc (6);
wherein said piston (13) is configured to be housed and moved longitudinally in a cavity of the casing (3) in one pushing direction and in a retraction direction, opposite to the pushing direction.

19. The brake device according to the preceding claim, wherein the axial drive system comprises:
- at least one fluid access (14), located in the casing (3), said access being configured to introduce and extract fluid in the cavity of said casing (3); wherein the introduction and extraction of said fluid is configured to move the piston (13) in the axial direction, in a pushing and recovery direction, respectively; and
- a high pressure gasket (15) located in the cavity of the casing (3), configured to exert transverse pressure on a lateral surface of the piston (13);
wherein said high pressure gasket (15) is configured to retract the piston (13) into the cavity of the casing (3) when the axial drive system is deactivated.

20. The brake device according to claim 18 or 19 and claim 13, wherein the piston (13) comprises a cylindrical ring shape and the compression springs (11) comprise a conical shape; or the piston (13) comprises a conical ring shape and the compression springs (11) comprise a cylindrical shape.

21. The brake device according to claim 18, wherein the axial drive system comprises:
- an electric motor (16) fixed to the casing (3), configured to rotate a pinion (17) toothed, connected to a shaft of said motor (16);
wherein the piston (13) comprises a ring shape comprising a thread on an outer cylindrical surface and a toothing on an inner cylindrical surface, meshed with the pinion (17); wherein the casing (3) comprises an internal thread in the cavity, threaded with the thread of the piston; wherein the electric motor (16) is configured to rotate the pinion (17), transmitting the rotation to the piston (13) which, upon rotation, is configured to be screwed into or unscrewed from the casing (3), moving axially, moving the brake disc (6, 7).

22. The brake device according to any of claims 1 to 18, wherein the axial drive system comprises:
- two electric motors (16) fixed to the casing (3);
wherein the pusher element (13, 17, 18) comprises two pressing members (18), each of which is connected by a threaded attachment to a shaft of the electric motor (16), said pressing members (18) being configured to push the brake disc (6, 7) in the axial direction;
wherein upon actuation of the electric motors (16), the threaded attachment of the pressing members (18) transforms the rotation of the motor (16) into an axial displacement of the pressing members (18), moving them in said axial direction.

23. The brake device according to any of the preceding claims, comprising a turbofan skeleton (19) comprising a hollow cylindrical shape and a plurality of turbofan blades (191), separated by cavities, said turbofan blades (191) arranged on a lateral surface of the turbofan (19), wherein said turbofan (19) is arranged concentrically surrounding the brake discs (6, 7) and the lining disc (5), it is connected to the rotating shaft, and it is configured to rotate about itself, with respect to the first casing (3), generating forced ventilation in the brake device.

## Patentansprüche

1. Bremsvorrichtung, die an einer rotierenden Welle angebracht werden kann, wobei die Bremsvorrichtung umfasst:
einen Führungsträger (1), der starr auf der Welle angebracht werden kann und wenigstens eine Längsübertragungsführung (2) umfasst, die in derselben axialen Richtung wie die Welle ausgerichtet ist und sich in einer exzentrischen Position in Bezug auf die Welle befindet, wenn der Führungsträger auf der Welle angebracht ist;
ein erstes feststehendes Trägergehäuse (3);
ein erstes Schieberelement (13, 17, 18), das in axialer Richtung in Bezug auf das erste Gehäuse (3) beweglich ist;
eine Belagscheibe (5), umfassend:
eine Trägerscheibe (51), die mit der wenigstens einen Übertragungsführung (2) des Führungsträgers (1) schwimmend verbunden ist;
einen ersten Belag (52), der an einer ersten Oberfläche der Trägerscheibe (51) fixiert ist; und
einen zweiten Belag (53), der an einer zweiten Oberfläche der Trägerscheibe (51) fixiert ist;
eine erste Bremsscheibe (6), die in axialer Richtung in Bezug auf das erste Gehäuse (3) beweglich ist; und
eine zweite Bremsscheibe (7);
wobei die Belagscheibe (5) zwischen der ersten Bremsscheibe (6) und der zweiten Bremsscheibe (7) angeordnet ist und
der Führungsträger (1) dazu eingerichtet ist, eine Drehung der Welle auf die Belagscheibe (5) zu übertragen, die dazu eingerichtet ist, sich gemeinsam mit der Welle zu drehen;
**dadurch gekennzeichnet, dass** das erste Schieberelement (13, 17, 18) und die erste Bremsscheibe (6) verbunden sind und eine axiale Verschiebungseinheit ausbilden;
wobei das erste Gehäuse (3) ein Antriebssystem umfasst, das dazu eingerichtet ist, wenn es aktiviert wird, das erste Schieberelement (13, 17, 18) in der axialen Richtung in Richtung der Belagscheibe (5) zu bewegen, wodurch die erste Scheibenbremse (6) in Richtung des ersten Belags (51) der Belagscheibe (5) geschoben wird;
die erste Bremsscheibe (6) dazu eingerichtet ist, einen Druck auf den ersten Belag (52) in der axialen Richtung auszuüben, wodurch Reibung erzeugt wird, und die Belagscheibe (5) in Richtung der zweiten Bremsscheibe (7) zu bewegen, wenn sie durch das erste Schieberelement (13, 17, 18) geschoben wird;
das Antriebssystem dazu eingerichtet ist, wenn es deaktiviert ist, das erste Schieberelement (13, 17, 18) zurückzuziehen, wobei es sich in der axialen Richtung entgegengesetzt zu der Schubrichtung auf die erste Bremsscheibe (6) bewegt;
die erste Bremsscheibe (6) dazu eingerichtet ist, sich in der axialen Richtung entgegengesetzt zu der Schubrichtung auf die Belagscheibe (5) zusammen mit dem Zurückziehen des ersten Schieberelementes (13, 17, 18) zu bewegen; und
die schwimmende Kopplung der Belagscheibe (5) mit der Übertragungsführung (2) zusammen mit der Drehung der Belagscheibe (5) dazu eingerichtet ist, von den beiden Bremsscheiben (6, 7) getrennt zu werden, wenn sich die erste Bremsscheibe (6) in die entgegengesetzte Richtung bewegt.

2. Bremsvorrichtung nach dem vorangehenden Anspruch, umfassend:
ein zweites feststehendes Trägergehäuse, das an einem dem ersten Gehäuse (3) gegenüberliegenden Stirnteil angeordnet ist;
ein zweites Schieberelement, das in axialer Richtung in Bezug auf das zweite Gehäuse beweglich ist;
wobei das zweite Schieberelement und die zweite Bremsscheibe (7) fixiert sind und eine axiale Verschiebeeinheit ausbilden;
das zweite Gehäuse ein Antriebssystem umfasst, das dazu eingerichtet ist, wenn es aktiviert wird, das zweite Schieberelement in der axialen Richtung in Richtung der Belagscheibe (5) zu bewegen, wodurch die zweite Bremsscheibe (7) in Richtung des zweiten Belags (53) der Belagscheibe (5) geschoben wird;
die zweite Bremsscheibe (7) dazu eingerichtet ist, einen Schiebedruck auf den zweiten Belag (53) in der axialen Richtung auszuüben und die Belagscheibe (5) in Richtung der ersten Bremsscheibe (6) zu bewegen, wenn sie durch das zweite Schieberelement geschoben wird;
das Antriebssystem des zweiten Gehäuses dazu eingerichtet ist, wenn es deaktiviert ist, das zweite Schieberelement zurückzuziehen, wobei es sich in einer Richtung entgegengesetzt zu der Schubrichtung auf die zweite Bremsscheibe (7) bewegt;
die zweite Bremsscheibe (7) dazu eingerichtet ist, sich in der axialen Richtung entgegengesetzt zu der Schubrichtung auf die Belagscheibe (5) zu bewegen, und zwar gemeinsam mit dem Zurückziehen des zweiten Schieberelementes in der genannten entgegengesetzten Richtung; und
die schwimmende Kopplung der Belagscheibe (5) an die Übertragungsführung (2) zusammen mit der Drehung der Belagscheibe (5) auf der Welle dazu eingerichtet ist, die Belagscheibe (5) von den beiden Bremsscheiben (6, 7) zu trennen, ohne Restreibung zu erzeugen, wenn das erste und das zweite Schieberelement (13, 17, 18) zurückgezogen werden, wodurch die Bremsscheiben (6, 7) in der entgegengesetzten Richtung zur Schieberichtung bewegt werden.

3. Bremsvorrichtung nach einem der vorangehenden Ansprüche, bei der die Trägerscheibe (51) der Belagscheibe (5) umfasst:
einen äußeren Umfangsbereich auf der ersten und zweiten Oberfläche der Trägerscheibe (51), in dem die Beläge (52, 53) fixiert sind; und
wenigstens ein durchgehendes Gleitverbindungsgehäuse (54), das die axiale Richtung umfasst;
wobei das Gleitverbindungsgehäuse (54) mit der wenigstens einen Längsübertragungsführung (2) in einer losen Passung gekoppelt ist.

4. Bremsvorrichtung nach dem vorangehenden Anspruch, umfassend eine elastische Dämpfungsdichtung (8), die zwischen jeder angepassten Kupplung jeder Übertragungsführung (2) und dem Gleitverbindungsgehäuse (54) der Belagscheibe (5) angeordnet ist.

5. Bremsvorrichtung nach einem der vorangehenden Ansprüche, bei der die Belagscheibe (5) eine Vielzahl von Wärmeableitungsbelagrippen (55) aufweist, die an einem Umfang eines zentralen Durchgangslochs der Trägerscheibe (51) angeordnet sind, wobei:
die Vielzahl von Belagsrippen (55) mittels einer starren Verbindungseinrichtung starr an der Trägerscheibe (51) angebracht sind; oder
die Vielzahl von Belagsrippen (55) und die Trägerscheibe (51) aus einem einzigen Gussstück bestehen.

6. Bremsvorrichtung nach einem der vorangehenden Ansprüche, bei dem die Belagscheibe (5) eine Vielzahl von ersten Belägen (52) und zweiten Belägen (53) aufweist, die jeweils in einem äußeren Bereich der ersten und zweiten Oberfläche der Trägerscheibe (51) fixiert sind, wobei die Beläge durch radiale kanalartige Spalte (56) getrennt sind und die Beläge (52, 53) eine Schaufelform aufweisen.

7. Bremsvorrichtung nach einem der vorangehenden Ansprüche, umfassend eine Partikelfilterstruktur (9), die konzentrisch über der Belagscheibe (5) angeordnet und dazu eingerichtet ist, von den Belägen (52, 53) gelöste Partikel zurückzuhalten.

8. Bremsvorrichtung nach dem vorangehenden Anspruch, bei der die Filterstruktur (9) ein zylinderförmiger Rahmen ist, der die erste und zweite Bremsscheibe (6, 7) abdeckt.

9. Bremsvorrichtung nach einem der vorangehenden Ansprüche, bei der wenigstens eine Bremsscheibe (6, 7) eine Ringform mit einer zentralen, zu der Welle konzentrischen Scheibendurchgangsbohrung aufweist, die die axiale Richtung und einen massiven äußeren Reibabschnitt (61, 71) gegenüber den Belägen (52, 53) umfasst.

10. Bremsvorrichtung nach einem der vorangehenden Ansprüche, bei der wenigstens eine Bremsscheibe (6, 7) eine Ringform mit einer zentralen, zu der Welle konzentrischen Scheibendurchgangsbohrung umfasst, die die axiale Richtung und einen äußeren Reibungsabschnitt (61, 71) gegenüber den Belägen (52, 53) umfasst, umfassend wenigstens einen inneren Kanal (62, 72), der für den Durchgang eines Fluids ausgelegt ist.

11. Bremsvorrichtung nach einem der vorangehenden Ansprüche, bei der wenigstens eine Bremsscheibe (6, 7) eine Vielzahl von Wärmeableitungs-Bremslamellen (63, 73) umfasst, wobei die Bremslamellen (63, 73) vorzugsweise an einem Außenumfang der Bremsscheibe (6, 7) in radialer Richtung angeordnet sind.

12. Bremsvorrichtung nach einem der vorangehenden Ansprüche, umfassend ein auf der Welle anbringbares Lager (10), vorzugsweise ein Wälzlager.

13. Bremsvorrichtung nach einem der vorangehenden Ansprüche, umfassend wenigstens eine Druckfeder (11), die zwischen den Bremsscheiben (6, 7) angeordnet und dazu eingerichtet ist, einen Trenndruck zwischen den Bremsscheiben (6, 7) auszuüben.

14. Bremsvorrichtung nach einem der vorangehenden Ansprüche, umfassend wenigstens ein Führungselement (12), das an dem ersten Gehäuse (3) fixiert und in axialer Richtung der Welle ausgerichtet ist; wobei die erste Bremsscheibe (6) eine erste Scheibendurchgangsbohrung (64) umfasst, die lose an das Führungselement (12) angepasst ist; und die zweite Bremsscheibe (7) eine zweite Scheibendurchgangsbohrung (74) umfasst, die an das Führungselement angepasst ist.

15. Bremsvorrichtung nach dem vorangehenden Anspruch, umfassend eine elastische Dämpfungsdichtung (8), die zwischen jedem Führungselement (12) und jeder Bremsscheibendurchgangsbohrung (64, 74) angeordnet ist.

16. Bremsvorrichtung nach Anspruch 14 oder 15, umfassend eine Vielzahl von Führungselementen (12), die jeweils eine in eine Bremsscheibendurchgangsbohrung (64, 74) derselben Vielzahl von Durchgangsbohrungen (64, 74) jeder der Bremsscheiben (6, 7) eingefügte Führungsschraube aufweisen, wobei die Führungsschrauben zur Führung der Verschiebung der ersten Bremsscheibe (6) in axialer Richtung der Welle eingerichtet und an dem Gehäuse (3) der Bremsvorrichtung fixiert sind.

17. Bremsvorrichtung nach dem vorangehenden Anspruch, umfassend eine Vielzahl von Druckfedern (11), die jeweils konzentrisch an jeder Führungsschraube angebracht sind, wobei die Druckfedern (11) zwischen der ersten Bremsscheibe (6) und der zweiten Bremsscheibe (7) angeordnet sind und die Druckfedern (11) dazu eingerichtet sind, einen Trenndruck zwischen den Bremsscheiben (6, 7) auszuüben.

18. Bremsvorrichtung nach einem der vorangehenden Ansprüche, bei der das Schieberelement (13, 17, 18) des axialen Antriebssystems umfasst:
einen Kolben (13), der dazu eingerichtet ist, eine Druckkraft auf eine Seitenfläche der ersten Bremsscheibe (6) auszuüben;
wobei der Kolben (13) dazu eingerichtet ist, in einem Hohlraum des Gehäuses (3) in einer Schubrichtung und in einer Rückzugsrichtung, die der Schubrichtung entgegengesetzt ist, aufgenommen zu werden und in Längsrichtung beweglich zu sein.

19. Bremsvorrichtung nach dem vorangehenden Anspruch, bei der das axiale Antriebssystem umfasst:
wenigstens einen Fluidzugang (14), der in dem Gehäuse (3) angeordnet ist, wobei der Zugang dazu eingerichtet ist, Fluid in den Hohlraum des Gehäuses (3) einzuleiten und zu entnehmen; wobei das Einleiten und Entnehmen des Fluids dazu eingerichtet ist, den Kolben (13) in der axialen Richtung in einer Schub- bzw. Rückziehrichtung zu bewegen; und
eine Hochdruckdichtung (15), die sich in dem Hohlraum des Gehäuses (3) befindet und dazu eingerichtet ist, einen Querdruck auf eine Seitenfläche des Kolbens (13) auszuüben;
wobei die Hochdruckdichtung (15) dazu eingerichtet ist, den Kolben (13) in den Hohlraum des Gehäuses (3) zurückzuziehen, wenn das axiale Antriebssystem deaktiviert ist.

20. Bremsvorrichtung nach Anspruch 18 oder 19 und Anspruch 13, bei der der Kolben (13) eine zylindrische Ringform umfasst und die Druckfedern (11) eine konische Form umfassen; oder der Kolben (13) eine konische Ringform umfasst und die Druckfedern (11) eine zylindrische Form umfasst.

21. Bremsvorrichtung nach Anspruch 18, bei der das axiale Antriebssystem umfasst:
einen an dem Gehäuse (3) fixierten Elektromotor (16), der dazu eingerichtet ist, ein mit einer Welle des Motors (16) verbundenes, verzahntes Ritzel (17) in Drehung zu versetzen;
wobei der Kolben (13) eine Ringform umfasst, die ein Gewinde auf einer äußeren zylindrischen Oberfläche und eine Verzahnung auf einer inneren zylindrischen Oberfläche umfasst, die mit dem Ritzel (17) in Eingriff steht; das Gehäuse (3) ein Innengewinde in dem Hohlraum umfasst, das mit dem Gewinde des Kolbens verschraubt ist und der Elektromotor (16) dazu eingerichtet ist, das Ritzel (17) zu drehen und die Drehung auf den Kolben (13) zu übertragen, der dazu eingerichtet ist, bei Drehung in das Gehäuse (3) eingeschraubt oder aus diesem herausgeschraubt zu werden und sich dabei axial bewegt und die Bremsscheibe (6, 7) bewegt.

22. Bremsvorrichtung nach einem der Ansprüche 1 bis 18, bei der das axiale Antriebssystem umfasst:
zwei Elektromotoren (16), die an dem Gehäuse (3) angebracht sind;
wobei das Schieberelement (13, 17, 18) zwei Schieberelemente (18) umfasst, von denen jedes durch eine Gewindeanbringung mit einer Welle des Elektromotors (16) verbunden ist, und die Schieberelemente (18) dazu eingerichtet sind, die Bremsscheibe (6, 7) in der axialen Richtung zu schieben; und
bei Betätigung der Elektromotoren (16) die Gewindeanbringung der Schieberelemente (18) die Drehung des Motors (16) in eine axiale Verschiebung der Schieberelemente (18) umwandelt und diese in der genannten axialen Richtung bewegt.

23. Bremsvorrichtung nach einem der vorangehenden Ansprüche, umfassend ein Turbolüfterskelett (19), das eine hohlzylindrische Form und eine Vielzahl von durch Hohlräume getrennte Turbolüfterschaufeln (191) aufweist, wobei die Turbolüfterschaufeln (191) an einer Seitenfläche des Turbolüfters (19) angeordnet sind, der Turbolüfter (19) konzentrisch um die Bremsscheiben (6, 7) und die Belagscheibe (5) herum angeordnet, mit der Drehwelle verbunden und dazu eingerichtet ist, sich in Bezug auf das erste Gehäuse (3) um sich selbst zu drehen, wodurch eine Zwangsbelüftung in der Bremsvorrichtung erzeugt wird.

## Revendications

1. Dispositif de frein pouvant être fixé sur un arbre rotatif, dans lequel le dispositif de frein comprend :
- un support de guidage (1), pouvant être rigidement fixé sur l'arbre, comprenant au moins un guide de transmission longitudinal (2) orienté dans la même direction axiale de l'arbre, positionné dans une position excentrique par rapport à l'arbre, lorsque le support de guidage est assemblé sur l'arbre ;
- un premier boîtier de support fixe (3) ;
- un premier élément poussoir (13, 17, 18) mobile dans la direction axiale par rapport au premier boîtier (3) ;
- un disque à garniture (5) comprenant :
- un disque de support (51) couplé à l'au moins un guide de transmission (2) du support de guidage (1) d'une manière flottante ;
- une première garniture (52) fixée sur une première surface du disque de support (51) ; et
- une deuxième garniture (53) fixée sur une deuxième surface du disque de support (51) ;
- un premier disque de frein (6) mobile dans la direction axiale par rapport au premier boîtier (3) ; et
- un deuxième disque de frein (7) ;
dans lequel le disque à garniture (5) est positionné entre le premier disque de frein (6) et le deuxième disque de frein (7) ;
dans lequel le support de guidage (1) est configuré pour transmettre une rotation de l'arbre au disque à garniture (5), qui est configuré pour tourner conjointement avec l'arbre ;
**caractérisé en ce que** le premier élément poussoir (13, 17, 18) et le premier disque de frein (6) sont raccordés, formant une unité de déplacement axial ;
- dans lequel le premier boîtier (3) comprend un système d'entraînement configuré pour, lorsqu'il est activé, déplacer le premier élément poussoir (13, 17, 18), dans la direction axiale, vers le disque à garniture (5), poussant le premier diques de frein (6) vers la première garniture (51) dudit disque à garniture (5) ;
- dans lequel le premier disque de frein (6) est configuré pour exercer une pression de poussée sur la première garniture (52) dans la direction axiale, générant la friction, et pour déplacer ledit disque à garniture (5) vers le deuxième disque de frein (7), lorsqu'il est poussé par le premier élément poussoir (13, 17, 18) ;
- dans lequel le système d'entraînement est configuré pour, lorsqu'il est désactivé, rétracter le premier élément poussoir (13, 17, 18), se déplaçant dans une direction opposée à la direction de poussée sur le premier disque de frein (6), dans la direction axiale ;
- dans lequel le premier disque de frein (6) est configuré pour se déplacer dans la direction opposée à la direction de poussée sur le disque à garniture (5), dans la direction axiale, conjointement avec la rétraction du premier élément poussoir (13, 17, 18) ; et
- dans lequel le couplage flottant du disque à garniture (5) sur le guide de transmission (2) conjointement avec la rotation dudit disque à garniture (5) sont configurés pour le séparer des deux disques de frein (6, 7), lorsque le premier disque de frein (6) se déplace dans la direction opposée.

2. Dispositif de frein selon la revendication précédente, comprenant :
- un deuxième boîtier de support fixe, agencé au niveau d'une partie d'extrémité opposée du premier boîtier (3) ;
- un deuxième élément poussoir mobile dans la direction axiale par rapport au deuxième boîtier ;
dans lequel le deuxième élément poussoir et le deuxième disque de frein (7) sont fixes, formant une unité de déplacement axial ;
dans lequel le deuxième boîtier comprend un système d'entraînement configuré pour, lorsqu'il est activé, déplacer le deuxième élément poussoir, dans la direction axiale, vers le disque à garniture (5), poussant le deuxième disque de frein (7) vers la deuxième garniture (53) dudit disque à garniture (5) ;
dans lequel le deuxième disque de frein (7) est configuré pour exercer une pression de poussée sur la deuxième garniture (53) dans la direction axiale et pour déplacer ledit disque à garniture (5) vers le premier disque de frein (6), lorsqu'il est poussé par le deuxième élément poussoir ; dans lequel le système d'entraînement du deuxième boîtier est configuré pour, lorsqu'il est désactivé, rétracter le deuxième élément poussoir, se déplaçant dans une direction opposée à la direction de poussée sur le deuxième disque de frein (7) ;
dans lequel le deuxième disque de frein (7) est configuré pour se déplacer dans la direction opposée à la direction de poussée sur le disque à garniture (5), dans la direction axiale, conjointement avec la rétraction, dans ladite direction opposée, du deuxième élément poussoir ;
dans lequel le couplage flottant du disque à garniture (5) sur le guide de transmission (2) conjointement avec la rotation dudit disque à garniture (5) sur l'arbre sont configurés pour séparer ledit disque à garniture (5) des deux disques de frein (6, 7) sans générer de friction résiduelle, lorsque les premier et deuxième éléments poussoirs (13, 17, 18) sont rétractés, déplaçant les disques de frein (6, 7) dans la direction opposée à la direction de poussée.

3. Dispositif de frein selon l'une quelconque des revendications précédentes, dans lequel le disque de support (51) du disque à garniture (5) comprend :
- une zone périmétrale externe sur les première et deuxième surfaces du disque de support (51) dans lesquelles les garnitures (52, 53) sont fixées ; et
- au moins un boîtier de raccordement coulissant débouchant (54) qui comprend la direction axiale ;
dans lequel ledit boîtier de raccordement coulissant (54) est couplé à l'au moins un guide de transmission longitudinal (2) dans une fixation ajustée sans serrage.

4. Dispositif de frein selon la revendication précédente, comprenant un joint d'amortissement élastique (8) positionné entre chaque couplage ajusté de chaque guide de transmission (2) et le boîtier de raccordement coulissant (54) du disque à garniture (5).

5. Dispositif de frein selon l'une quelconque des revendications précédentes, dans lequel le disque à garniture (5) comprend une pluralité d'ailettes à garniture de dissipation de chaleur (55) agencées sur un périmètre d'un trou débouchant central du disque de support (51), dans lequel :
- ladite pluralité d'ailettes à garniture (55) sont rigidement fixées au disque de support (51) au moyen d'un moyen de raccordement rigide ; ou bien
- dans lequel ladite pluralité d'ailettes à garniture (55) et le disque de support (51) comprennent un moulage unique.

6. Dispositif de frein selon l'une quelconque des revendications précédentes, dans lequel le disque à garniture (5) comprend une pluralité de premières garnitures (52) et de deuxièmes garnitures (53), respectivement fixées dans une zone externe des première et deuxième surfaces du disque de support (51), lesdites garnitures étant séparées par des interstices radiaux canelés (56) ; dans lequel les garnitures (52, 53) comprennent une forme de pale.

7. Dispositif de frein selon l'une quelconque des revendications précédentes, comprenant une structure de filtre à particules (9) agencée de manière concentrique, recouvrant le disque à garniture (5), configurée pour retenir les particules qui se détachent des garnitures (52, 53).

8. Dispositif de frein selon la revendication précédente, dans lequel la structure de filtre (9) est un bâti de forme cylindrique agencé en recouvrant les premier et deuxième disques de frein (6, 7).

9. Dispositif de frein selon l'une quelconque des revendications précédentes, dans lequel au moins un disque de frein (6, 7) comprend une forme annulaire, avec un trou débouchant de disque central, concentrique par rapport à l'arbre, comprenant la direction axiale et une section de friction externe pleine (61, 71) contre les garnitures (52, 53).

10. Dispositif de frein selon l'une quelconque des revendications précédentes, dans lequel au moins un disque de frein (6, 7) comprend une forme annulaire, avec un trou débouchant de disque central, concentrique par rapport à l'arbre, comprenant la direction axiale et une section de friction externe (61, 71) contre les garnitures (52, 53), comprenant au moins un canal interne (62, 72) configuré pour le passage d'un fluide.

11. Dispositif de frein selon l'une quelconque des revendications précédentes, dans lequel au moins un disque de frein (6, 7) comprend une pluralité d'ailettes de frein de dissipation de chaleur (63, 73), dans lequel de préférence lesdites ailettes de frein (63, 73) sont positionnées sur un périmètre externe dudit disque de frein (6, 7), agencé dans une direction radiale.

12. Dispositif de frein selon l'une quelconque des revendications précédentes, comprenant un palier (10), de préférence un palier à rouleaux, pouvant être fixé sur l'arbre.

13. Dispositif de frein selon l'une quelconque des revendications précédentes, comprenant au moins un ressort de compression (11) positionné entre les disques de frein (6, 7), configuré pour exercer une pression de séparation entre lesdits disques de frein (6, 7).

14. Dispositif de frein selon l'une quelconque des revendications précédentes, comprenant au moins un élément de guidage (12), fixé sur le premier boîtier (3), orienté dans la direction axiale de l'arbre ; dans lequel le premier disque de frein (6) comprend un premier trou débouchant de disque (64) ajusté sans serrage sur l'élément de guidage (12) ; dans lequel le deuxième disque de frein (7) comprend un deuxième trou débouchant de disque (74) ajusté sur l'élément de guidage.

15. Dispositif de frein selon la revendication précédente, comprenant un joint d'amortissement élastique (8) positionné entre chaque élément de guidage (12) avec chaque trou débouchant de disque de frein (64, 74).

16. Dispositif de frein selon la revendication 14 ou 15, comprenant une pluralité d'éléments de guidage (12) comprenant chacun une vis de guidage insérée dans un trou débouchant de disque de frein (64, 74), de la même pluralité de trous débouchants (64, 74), de chacun des disques de frein (6, 7), dans lequel lesdites vis de guidage sont configurées pour guider le déplacement du premier disque de frein (6) dans la direction axiale de l'arbre et sont fixées sur le boîtier (3) du dispositif de frein.

17. Dispositif de frein selon la revendication précédente, comprenant une pluralité de ressorts de compression (11), chacun monté de manière concentrique sur chaque vis de guidage, lesdits ressorts de compression (11) étant positionnés entre le premier disque de frein (6) et le deuxième disque de frein (7), lesdits ressorts de compression (11) étant configurés pour exercer une pression de séparation entre lesdits disques de frein (6, 7).

18. Dispositif de frein selon l'une quelconque des revendications précédentes, dans lequel l'élément poussoir (13, 17, 18) du système d'entraînement axial comprend :
- un piston (13) configuré pour générer une charge de poussée sur une surface latérale du premier disque de frein (6) ;
dans lequel ledit piston (13) est configuré pour être logé et déplacé longitudinalement dans une cavité du boîtier (3) dans une direction de poussée et dans une direction de rétraction, opposée à la direction de poussée.

19. Dispositif de frein selon la revendication précédente, dans lequel le système d'entraînement axial comprend :
- au moins un accès de fluide (14) positionné dans le boîtier (3), ledit accès étant configuré pour introduire et extraire le fluide dans la cavité dudit boîtier (3) ;
dans lequel l'introduction et l'extraction dudit fluidesont configurées pour déplacer le piston (13) dans la direction axiale, dans une direction de poussée et de récupération, respectivement ; et
- un joint haute pression (15) positionné dans la cavité du boîtier (3), configuré pour exercer la pression transversale sur une surface latérale du piston (13) ;
dans lequel ledit joint haute pression (15) est configuré pour rétracter le piston (13) dans la cavité du boîtier (3) lorsque le système d'entraînement axial est désactivé.

20. Dispositif de frein selon la revendication 18 ou 19 et la revendication 13, dans lequel le piston (13) comprend une forme d'anneau cylindrique et les ressorts de compression (11) comprennent une forme conique ; ou le piston (13) comprend une forme d'anneau conique et les ressorts de compression (11) comprennent une forme cylindrique.

21. Dispositif de frein selon la revendication 18, dans lequel le système d'entraînement axial comprend :
- un moteur électrique (16) fixé sur le boîtier (3), configuré pour faire tourner un pignon (17) denté, raccordé à un arbre dudit moteur (16) ;
dans lequel le piston (13) comprend une forme d'anneau comprenant un filetage sur une surface cylindrique externe et une denture sur une surface cylindrique interne, engrenée avec le pignon (17) ; dans lequel le boîtier (3) comprend un filetage interne dans la cavité, fileté avec le filetage du piston ; dans lequel le moteur électrique (16) est configuré pour faire tourner le pignon (17), transmettant la rotation au piston (13) qui, suite à la rotation, est configuré pour être vissé dans ou dévissé du boîtier (3), se déplaçant axialement, déplaçant le disque de frein (6, 7).

22. Dispositif de frein selon l'une quelconque des revendications 1 à 18, dans lequel le système d'entraînement axial comprend :
- deux moteurs électriques (16) fixés sur le boîtier (3) ;
dans lequel l'élément poussoir (13, 17, 18) comprend deux éléments de pression (18), dont chacun est raccordé par une fixation filetée à un arbre du moteur électrique (16), lesdits éléments de pression (18) étant configurés pour pousser le disque de frein (6, 7) dans la direction axiale ;
dans lequel suite à l'actionnement des moteurs électriques (16), la fixation filetée des éléments de pression (18) transforme la rotation du moteur (16) en un déplacement axial des éléments de pression (18), les déplaçant dans ladite direction axiale.

23. Dispositif de frein selon l'une quelconque des revendications précédentes, comprenant un squelette de réacteur à double flux (19) comprenant une forme cylindrique creuse et une pluralité de pales de réacteur à double flux (191), séparées par des cavités, lesdites pales de réacteur à double flux (191) étant agencées sur une surface latérale du réacteur à double flux (19), dans lequel ledit réacteur à double flux (19) est agencé de manière concentrique, entourant les disques de frein (6, 7) et le disque à garniture (5), il est raccordé à l'arbre rotatif et il est configuré pour tourner sur lui-même, par rapport au premier boîtier (3), générant la ventilation forcée dans le dispositif de frein.
